# EUROPEAN PATENT SPECIFICATION

(11) **EP 3 539 750 B1**
(45) Date of publication and mention of the grant of the patent: **10.05.2023**
(21) Application number: 17868948.5
(22) Date of filing: 31.10.2017
(51) Int. Cl.: B29C 55/16

(54) **BIAXIAL STRETCHING DEVICE**
VORRICHTUNG ZUR BIAXIALEN DEHNUNG
DISPOSITIF D'ÉTIREMENT BIAXIAL

(30) Priority: 10.11.2016 JP 2016219487
(43) Date of publication of application: 18.09.2019
(73) Proprietor: National University Corporation Gunma University, Maebashi-shi, Gunma 371-8510 (JP)
(72) Inventor: UEHARA, Hiroki, Maebashi-shi Gunma 371-8510 (JP); YAMANOBE, Takeshi, Maebashi-shi Gunma 371-8510 (JP); UENO, Masahiko, Maebashi-shi Gunma 371-8510 (JP)
(74) Representative: Meissner Bolte Partnerschaft mbB
(86) International application number: PCT/JP2017/039436
(87) International publication number: WO 2018/088280

(56) References cited:
- DE-C1- 19 510 281
- GB-A- 1 247 617
- JP-A- S6 067 836
- JP-A- 2003 207 430
- JP-A- 2004 017 367
- US-A- 2 728 941
- US-A- 2 759 217
- US-A1- 2015 072 040

## Description

### Technical Field

The present invention relates to a biaxial stretching device that biaxially stretches an object to be stretched.

### Background Art

As an example of a biaxial stretching device that biaxially stretches an object to be stretched, Japanese Patent Application Laid-Open JP 2004-17367 A discloses a biaxial stretching mechanism including a pantograph mechanism that is movably retained on a stretching bar, plural grips (chucks) that are fixed to the pantograph mechanism and that grip a sheet (object to be stretched), and a motor that moves the stretching bar.

JP 2005-254778 A discloses a film drawing machine including plural pins (chucks) that are movably retained by a retaining rail (bar) and grip a film (object to be stretched), and a moving mechanism that moves the retaining rail (bar). Another prior art technology is disclosed in US2759217.

### SUMMARY OF INVENTION

### Technical Problem

In the biaxial stretching mechanism of JP 2004-17367 A, since the grips (chucks) are fixed to the pantograph mechanism, it is necessary to provide gaps between the grips (chucks) to house the pantograph mechanism in a folded state prior to stretching the sheet (object to be stretched).

Thus, initial spacings between the grips (chucks) are enlarged, and the initial size of the sheet (object to be stretched) is also increased according to the spacing between the grips (chucks), making it difficult to increase the stretching ratio of the sheet (object to be stretched). Specifically, since the initial size of the sheet (object to be stretched) is approximately 100 mm × 100 mm and the stretching limit is approximately 1 m × 1 m, the limit of the stretching ratio is approximately 10 times.

In the film drawing machine of JP 2005-254778 A, the pins (chucks) are movable with respect to the retaining rail (bar). The spacings between the pins (chucks) can therefore not be kept constant, making it difficult to maintain a constant stretch ratio about an outer edge of the film (object to be stretched) when the film (object to be stretched) is stretched by the pins (chucks).

In the biaxial stretching mechanism of JP 2004-17367 A and the film drawing machine of JP 2005-254778 A, since there are no grips or pins (chucks) that grip corners of the rectangular sheet or film (object to be stretched), there is an issue that the corners are not stretched in a similar manner to a central portion.

Moreover, the biaxial stretching mechanism of JP 2004-17367 A proposes configuring an outer edge of the sheet (object to be stretched) with a protruding profile, and configuring gripping faces of the grips (chucks) with a recessed profile so as to fit together with the outer edge of the sheet (object to be stretched). This presents difficulties in application to stretching of sheets (object to be stretched) having a normal flat plate shape in which a central portion and an outer edge portion have the same thickness. In the film drawing machine of JP 2005-254778 A, the gripping faces of the pins (chucks) have angular profiles, such that localized stress is liable to occur in the film (object to be stretched), making it unsuitable for stretching with a high stretch ratio.

The biaxial stretching mechanism of JP 2004-17367 A and the film drawing machine of JP 2005-254778 A are not provided with a detection mechanism to detect stretching stress. Accordingly, even in cases in which there is a possibility of the object to be stretched snapping if tensile stress generated at the object to be stretched becomes too high, this cannot be ascertained, and so adjustment of the stretching speed and stretching temperature for biaxial stretching with a high stretch ratio cannot be performed efficiently.

In consideration of the above circumstances, an object of the present invention is to provide a biaxial stretching device capable of making initial spacings between chucks narrower and maintaining constant spacings between the chucks.

### Solution to the Problem

A biaxial stretching device according to a first aspect of the present invention includes, X direction bars and Y direction bars that are disposed in a grid pattern such that a central section of the grid pattern constitutes a placement location for a rectangular object to be stretched, plural moveable chucks that are attached to respective X direction bars and Y direction bars so as to be movable along a length direction of a corresponding X direction bar or Y direction bar, and that are each capable of gripping an outer edge of the rectangular object, a first drive means configured to move the X direction bars and the Y direction bars in directions orthogonal to their respective length directions, and a second drive means configured to move the moveable chucks in the length direction of the corresponding X direction bar or Y direction bar.

In the above configuration, the movable chucks are attached to the X direction bars and the Y direction bars disposed in a grid pattern. This enables initial spacings between the chucks while gripping the rectangular object to be made narrower than configurations in which spacings between the chucks are adjusted using a pantograph mechanism. This enables a small object to be stretched to be gripped, and enables the stretching ratio of the rectangular object to be increased.

The X direction bars and the Y direction bars are moved in directions orthogonal to their respective length directions by the first drive means to biaxially stretch the rectangular object gripped by the movable chucks. When this is performed, the movable chucks are each moved in the length direction of the corresponding X direction bar or Y direction bar by the second drive means, thereby enabling the spacings between the movable chucks to be adjusted and enabling the stretching ratio about the outer edge of the rectangular object to be kept uniform.

A biaxial stretching device according to a second aspect of the present invention is the biaxial stretching device according to the first aspect, further including, intersection chucks that are provided at intersections between the X direction bars and the Y direction bars, that are attached to the X direction bars and the Y direction bars so as to be movable along their length directions, and that are each capable of gripping a corner of the rectangular object, and central chucks that are attached to length direction central portions of the X direction bars and the Y direction bars, and that are each capable of gripping a central portion of the outer edge of the rectangular object.

The moveable chucks are provided between the intersection chucks and the central chucks, and are each capable of gripping the outer edge of the rectangular object between a central portion and a corner. The second drive means is synchronized with the first drive means and configured to move the moveable chucks at a slower speed than a speed at which the X direction bars and the Y direction bars are moved.

In the above configuration, the intersection chucks are provided at the intersections between the X direction bars and the Y direction bars, and the central chucks are attached to the length direction central portions of the X direction bars and the Y direction bars. Thus, the X direction bars and the Y direction bars are moved in directions orthogonal to their length directions by the first drive means to biaxially stretch the corners and the central portions of the rectangular object using the respective intersection chucks and central chucks.

When this is performed, the second drive means and the first drive means are synchronized, such that the moveable chucks are moved at a slower speed than the speed of the X direction bars and the Y direction bars, thereby enabling the respective spacings between the intersection chucks, the central chucks, and the movable chucks to be kept uniform. Namely, the stretching ratio about the outer edge of the rectangular object can be kept uniform.

Moreover, including the intersection chucks that grip the corners of the rectangular object enables similar stretching to be performed at the corners as at the central portions, thereby enabling uniform stretching across the entire rectangular object, and enabling a effective surface area of the rectangular object after stretching to be increased. This enables the corners of the rectangular object to also be utilized as product or a specimen.

A biaxial stretching device according to a third aspect of the present invention is the biaxial stretching device according to either the first aspect or the second aspect, wherein the first drive means includes first drive belts, each disposed in a direction orthogonal to the corresponding X direction bar or Y direction bar, and first fixing portions respectively fixing both end portions of the X direction bars and the Y direction bars to corresponding first drive belts.

The second drive means includes vertical members extending vertically downward from the moveable chucks, moveable bars each provided below the respective X direction bars and Y direction bars, and each extending in a direction orthogonal to the corresponding X direction bar or Y direction bar, holders that attach lower end portions of the vertical members to corresponding moveable bars so as to be movable in the length direction of the corresponding moveable bars, second drive belts disposed in directions orthogonal to respective moveable bars, and second fixing portions respectively fixing both end portions of the moveable bars to the second drive belts.

Drive force of a single motor is transmitted to first drive pulleys around which respective first drive belts are entrained, and to second drive pulleys around which respective second drive belts are entrained, each second drive pulley having a smaller diameter than the first drive pulleys.

In the above configuration, when the first drive belts are driven, the X direction bars and Y direction bars fixed to the first drive belts by the first fixing portions move together with the first drive belts so as to spread apart from each other. When this occurs, the movable chucks (and the intersection chucks and the central chucks) attached to the X direction bars and Y direction bars biaxially stretch the rectangular object.

When the second drive belts are driven, the moveable bars fixed to the second drive belts by the second fixing portions move together with the second drive belts so as to spread apart from each other. Note that the vertical members extending vertically downward from the movable chucks are movably attached to the moveable bars through the holders. Thus, the movable chucks move along the length direction of the corresponding X direction bar or Y direction bar, and also move together with the corresponding X direction bar or Y direction bar in a direction orthogonal to the length direction of the X direction bar or Y direction bar.

Drive force from the single motor is transmitted to the first drive pulleys of the first drive belts and the second drive pulleys of the second drive belts. Thus, the proportions of spacings between the movable chucks (and the intersection chucks and the central chucks) can be kept in a uniform state and the movable chucks (and the intersection chucks) can be moved by adjusting the proportions between the diameters of the first drive pulleys and the second drive pulleys, namely by adjusting the speed reduction ratios.

A biaxial stretching device according to a fourth aspect of the present invention is the biaxial stretching device according to any one of the first aspect to the third aspect, further including an opening formed at the central section lying between the X direction bars and the Y direction bars, a shutter that is capable of varying an opening area of the opening, and a heating means that blows hot air onto one or both faces of the rectangular object through the opening.

In the above configuration, a heated range of the rectangular object by the heating means can be adjusted by varying the opening area of the opening using the shutter. Thus, for example, the outer edge of the rectangular object can be prevented from being heated by the heating means, thereby enabling the outer edge of the rectangular object gripped by the movable chucks and so on to be suppressed from being softened and stretching locally.

A biaxial stretching device according to a fifth aspect of the present invention is the biaxial stretching device according to the second aspect, wherein gripping faces of the intersection chucks, the central chucks, and the moveable chucks are each configured with a circular profile, and are capable of gripping the rectangular object at an inside of an outermost edge of the rectangular object.

In the above configuration, the gripping faces of the intersection chucks, the central chucks, and the moveable chucks are each configured with a circular profile, such that localized stress is less likely to occur in the rectangular object than in configurations in which the gripping faces have profiles with corners, thereby enabling the rectangular object to be stretched without incurring damage.

Since there is no need to provide the outer edge of the rectangular object with anchor projections or the like in advance to anchor the gripping faces, a normal flat plate shaped film or sheet with a uniform thickness can be employed as the rectangular object.

Moreover, the gripping faces of the intersection chucks, the central chucks, and the moveable chucks are capable of gripping the rectangular object at the inside of the outermost edge of the rectangular object, there enabling a framing edge portion with a thicker thickness than a central portion to be formed at the outermost edge of the rectangular object.

This enables the strength of the outermost edge of the rectangular objectd to be maintained and enables tearing at the outermost edge to be suppressed. Moreover, the outermost edge of the rectangular object can be suppressed from slipping out under the gripping faces (referred to as chuck detachment).

A biaxial stretching device according to a sixth aspect of the present invention is the biaxial stretching device according to either the second aspect or the fifth aspect, wherein stress detection sensors configured to detect tensile stress generated at the central chucks are attached to the central chucks.

In the above configuration, the stress detection sensors are attached to the central chucks, thereby enabling the stretching speed and stretching temperature of the rectangular object to be adjusted according to the detected tensile stress generated at the central chucks, namely the tensile stress generated at the rectangular object.

### Advantageous Effects of the Invention

The present invention enables the initial spacings between the chucks to be made narrower and constant spacings between the chucks to be maintained.

### BRIEF DESCRIPTION OF THE DRAWINGS

- FIG. 1: is a plan view illustrating a biaxial stretching device according to an exemplary embodiment of the present invention.
- FIG. 2: is a perspective view illustrating drive means of a biaxial stretching device according to an exemplary embodiment of the present invention.
- FIG. 3: is a side view illustrating a biaxial stretching device according to an exemplary embodiment of the present invention.
- FIG. 4A: is a plan view illustrating a state prior to stretching a film using a biaxial stretching device.
- FIG. 4B: is a plan view illustrating a state after stretching a film using a biaxial stretching device.
- FIG. 5: is a side view illustrating a state after stretching a film using a biaxial stretching device.
- FIG. 6A: is an explanatory diagram illustrating an operation state of a moveable chuck of a biaxial stretching device.
- FIG. 6B: is an explanatory diagram illustrating an operation state of a moveable chuck of a biaxial stretching device.

### DESCRIPTION OF EMBODIMENTS

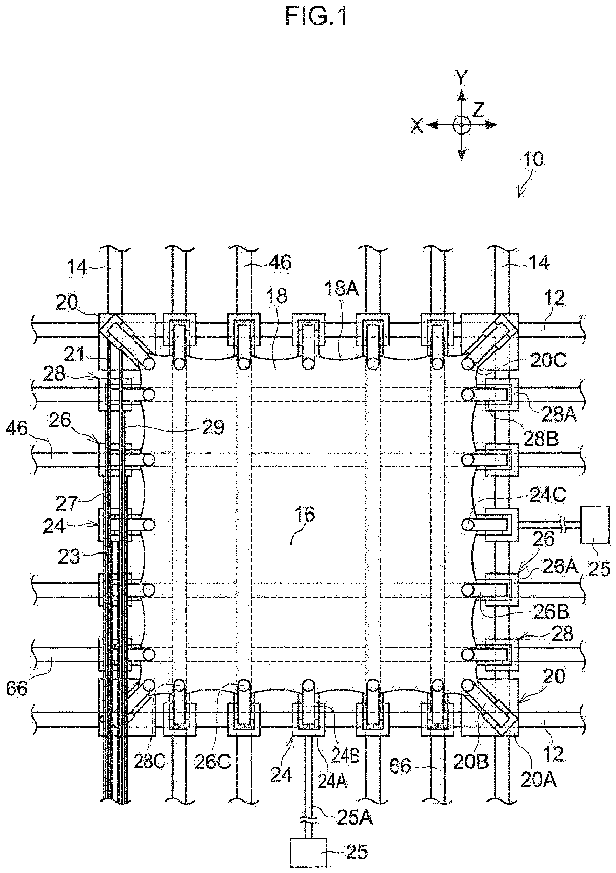

Explanation follows regarding a biaxial stretching device according to an exemplary embodiment of the present invention, with reference to FIG. 1 to FIG. 6. In the drawings, the X direction is a film stretching direction (first axial direction), the Y direction is a film stretching direction (second axial direction) orthogonal to the X direction, and the Z direction is an up-down direction (vertical direction).

### Configuration

As illustrated in FIG. 1, a biaxial stretching device 10 of the present exemplary embodiment includes a pair of X direction bars 12 extending along the X direction with a spacing between them, and a pair of Y direction bars 14 extending along the Y direction with a spacing between them.

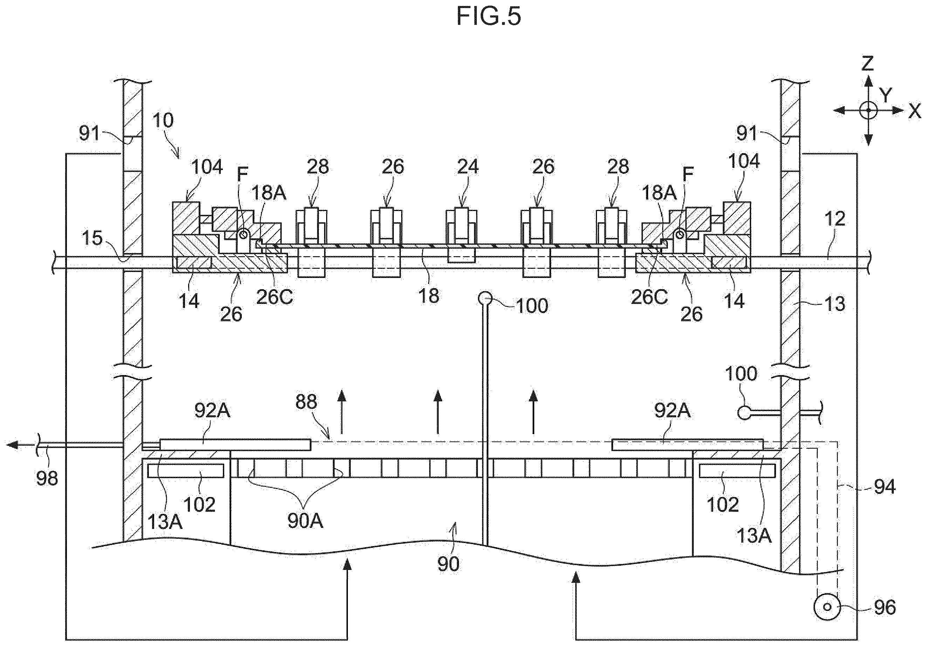

The X direction bars 12 and the Y direction bars 14 are disposed in a grid pattern, and as illustrated in FIG. 5, both end portions of the X direction bars 12 and the Y direction bars 14 are inserted into through holes 15 formed in side plates 13 of the biaxial stretching device 10 so as to be movable in directions orthogonal to their respective length directions. A central section 16 surrounded by the X direction bars 12 and the Y direction bars 14 constitutes a placement location for a rectangular resin film 18 serving as an object to be stretched.

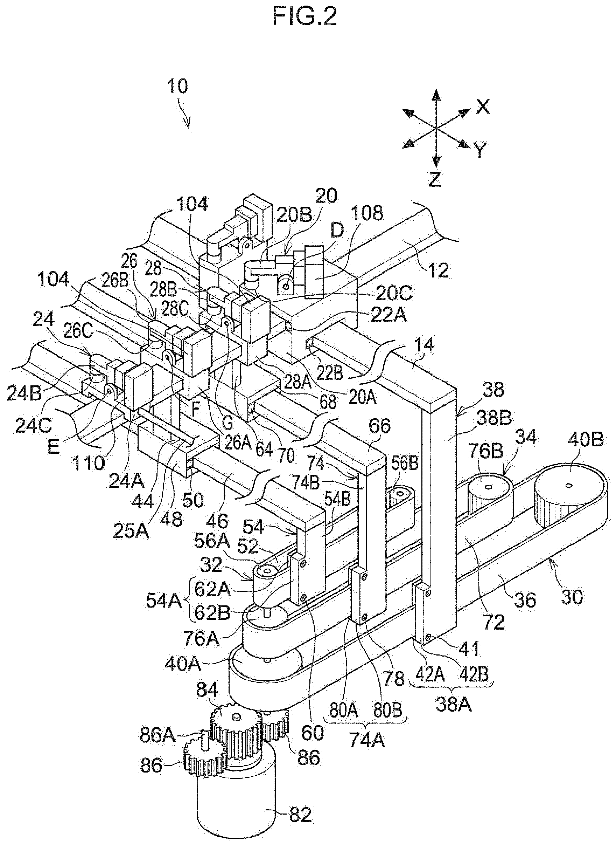

Intersection chucks 20 are provided at the four intersections between the X direction bars 12 and the Y direction bars 14. The intersection chucks 20 each include a base portion 20A and a grip portion 20B, and as illustrated in FIG. 2, each of the base portions 20A is attached to the corresponding X direction bar 12 and Y direction bar 14 through bearings 22A, 22B. The intersection chucks 20 are thus movable along the length directions of the X direction bars 12 and the Y direction bars 14.

The grip portion 20B of each of the intersection chucks 20 is capable of pivoting with respect to the base portion 20A about a rotation axis D under pneumatic pressure. Specifically, the grip portion 20B is provided with a cylinder 108, and one end portions of a pair of supply tubes 21, illustrated in FIG. 1, are connected to the cylinder 108.

The other end portion of each of the supply tubes 21 is connected to a compressor or canister, not illustrated in the drawings, and compressed air is supplied into the cylinder 108 through the supply tubes 21. The compressed air is supplied at a pressure of, for example, approximately 0.8 MPa.

Each of the supply tubes 21 extends parallel to either the X direction bars 12 or the Y direction bars 14, and moves together with the intersection chuck 20 without obstructing movement of the intersection chuck 20. Note that although omitted from illustration in some of the drawings, the pairs of supply tubes 21 are connected to each of the four intersection chucks 20.

A leading end of the grip portion 20B of each of the intersection chucks 20 is formed with a gripping face 20C that is capable of gripping a corner of the film 18 illustrated in FIG. 1. As illustrated in FIG. 1, the gripping face 20C is configured with a circular profile.

As illustrated in FIG. 2, the gripping faces 20C of the intersection chucks 20 do not contact the corresponding rotation axes D, such that a gap is present between each of the gripping faces 20C and the rotation axes D. This enables the corner of the film 18 to be gripped at the inside of an outermost edge by the gripping face 20C. Note that in the present exemplary embodiment, the size of the gap between the gripping face 20C and the corresponding rotation axis D is between approximately 10 mm and 20 mm.

As illustrated in FIG. 1, a length direction central portion of each of the X direction bars 12 and Y direction bars 14 is provided with a central chuck 24 including a base portion 24A and a grip portion 24B. The base portion 24A of each of the central chucks 24 is mounted to the corresponding X direction bar 12 or Y direction bar 14 through a non-illustrated rail, for example, and is attached so as to be immovable in the length direction of the X direction bar 12 or the Y direction bar 14 to which it is mounted, but movable slightly in a direction orthogonal to the length direction.

As illustrated in FIG. 2, the grip portion 24B of each of the central chucks 24 is capable of pivoting with respect to the base portion 24A about a rotation axis E under pneumatic pressure. Specifically, a cylinder 110 is provided to the grip portion 24B, and one end portions of a pair of supply tubes 23, illustrated in FIG. 1, are connected to the cylinder 110.

The other end portion of each of the supply tubes 23 is connected to a compressor or canister, not illustrated in the drawings, and compressed air is supplied into the cylinder 110 through the supply tubes 23. The compressed air is supplied at a pressure of, for example, approximately 0.8 MPa.

Each of the supply tubes 23 extends parallel to either the X direction bar 12 or the Y direction bar 14 to which the central chuck 24 is attached, and moves together with the central chuck 24 without obstructing movement of the central chuck 24. Note that although omitted from illustration in some of the drawings, the pairs of supply tubes 23 are connected to each of the four central chucks 24.

A leading end of the grip portion 24B of each of the central chucks 24 is formed with a gripping face 24C that is capable of gripping a central portion of an outer edge of the film 18 illustrated in FIG. 1. As illustrated in FIG. 1, the gripping face 24C is configured with a circular profile.

As illustrated in FIG. 2, the gripping faces 24C of the central chucks 24 do not contact the corresponding rotation axes E, such that a gap is present between each of the gripping faces 24C and the rotation axes E. This enables the film 18 to be gripped at the inside of the outermost edge by the gripping face 24C. Note that in the present exemplary embodiment, the size of the gap between the gripping face 24C and the corresponding rotation axis E is between approximately 5 mm and 15 mm.

As illustrated in FIG. 1, stress detection sensors 25 are attached through respective coupling shafts 25A to the central chucks 24 mounted to the X direction bars 12 and the central chucks 24 mounted to the Y direction bars 14. The stress detection sensors 25 are, for example, configured by load cells, and detect tensile stress arising at the central chucks 24, namely tensile stress generated at the film 18.

Two moveable chucks 26, 28 are provided between each of the intersection chucks 20 and central chucks 24 on the X direction bars 12 and the Y direction bars 14. The moveable chucks 26, 28 respectively include base portions 26A, 28A and grip portions 26B, 28B. The base portions 26A, 28A are attached so as to be movable in the length direction of the corresponding X direction bar 12 or Y direction bar 14.

As illustrated in FIG. 2, the grip portions 26B, 28B of the moveable chucks 26, 28 are capable of pivoting about rotation axes F, G with respect to the base portions 26A, 28A under pneumatic pressure. Specifically, cylinders 104 are provided to the grip portions 26B, 28B, and one end portions of pairs of supply tubes 27, 29, illustrated in FIG. 1, are connected to the cylinders 104.

The other end portion of each of the supply tubes 27, 29 is connected to a compressor or canister, not illustrated in the drawings, and compressed air is supplied into the cylinders 104 through the supply tubes 27, 29. The compressed air is supplied at a pressure of, for example, approximately 0.8 MPa.

Each of the supply tubes 27, 29 extends parallel to either the X direction bar 12 or the Y direction bar 14 to which the moveable chucks 26, 28 are attached, and moves together with the moveable chucks 26, 28 without obstructing movement of the moveable chucks 26, 28. Note that although omitted from illustration in some of the drawings, the pairs of supply tubes 27, 29 are connected to each of the moveable chucks 26, 28.

Leading ends of the grip portions 26B, 28B of the moveable chucks 26, 28 are respectively formed with gripping faces 26C, 28C that are capable of gripping the outer edge of the film 18 illustrated in FIG. 1 between a central portion and a corner. As illustrated in FIG. 1, the gripping faces 26C, 28C are each configured with a circular profile.

As illustrated in FIG. 2 and FIG. 5, the gripping faces 26C, 28C of the moveable chucks 26, 28 do not contact the corresponding rotation axes F, G, such that a gap is present between each of the gripping faces 26C, 28C and the rotation axes F, G. This enables the film 18 to be gripped at the inside of the outermost edge by the gripping faces 26C, 28C. Note that in the present exemplary embodiment, the size of the gaps between the gripping faces 26C, 28C and the corresponding rotation axes F, G is between approximately 5 mm and 15 mm.

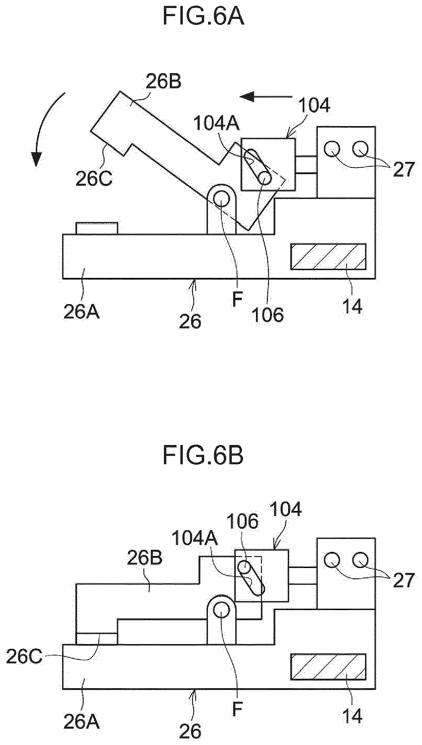

Specific explanation follows regarding the moveable chucks 26, with reference to FIG. 6A and FIG. 6B. A pin 106 projects out at a base end portion of the grip portion 26B of each of the moveable chucks 26. The pin 106 is inserted into an elongated hole 104A formed in a leading end of the cylinder 104.

When compressed air is supplied into the cylinder 104 through the supply tubes 27, the cylinder 104 moves in a horizontal direction, and the pin 106 moves within the elongated hole 104A accompanying the movement of the cylinder 104. The grip portion 26B of the moveable chuck 26 accordingly pivots about the rotation axis F with respect to the base portion 26A. Note that the intersection chucks 20, the central chucks 24, and the moveable chucks 28 are configured similarly to the moveable chucks 26.

As a first drive means, the biaxial stretching device 10 also includes a pair of bar drive means 30 that respectively move the X direction bars 12 in a direction orthogonal to their length direction, and the Y direction bars 14 in a direction orthogonal to their length direction.

As a second drive means, the biaxial stretching device 10 also includes a pair of first chuck drive means 32 and a pair of second chuck drive means 34 that respectively move the moveable chucks 26, 28 on the X direction bars 12 in the length direction of the X direction bars 12, and a pair of first chuck drive means and a pair of second chuck drive means that respectively move the moveable chucks 26, 28 on the Y direction bars 14 in the length direction of the Y direction bars 14.

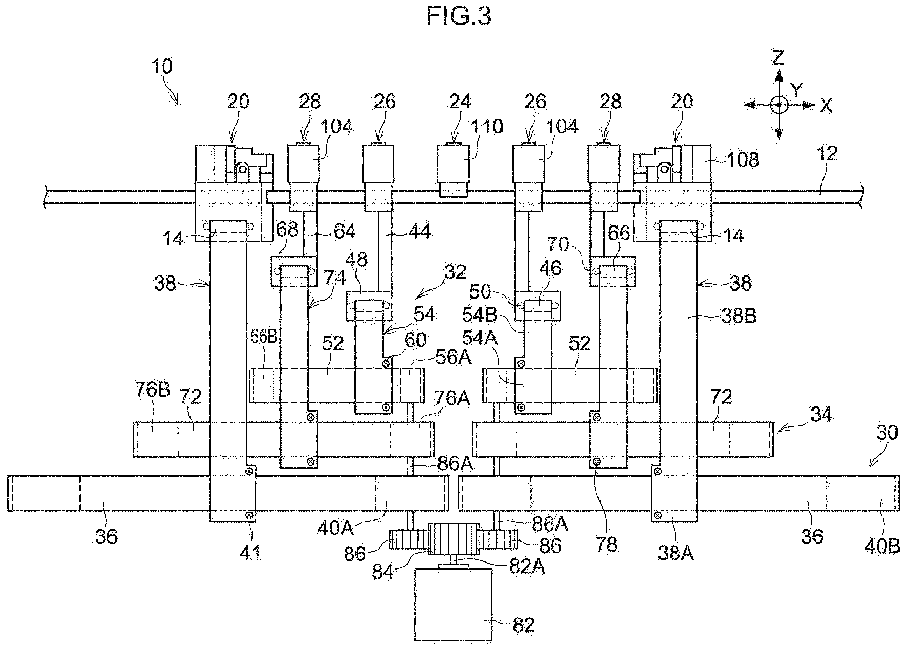

The bar drive means 30, the first chuck drive means 32, and the second chuck drive means 34 are respectively provided to the four side faces (outer sides of side plates) of the biaxial stretching device 10, and the drive means 30, 32, 34 on each of the four sides are configured similarly to each other. Accordingly, only the configuration of the bar drive means 30, the first chuck drive means 32, and the second chuck drive means 34 on one side face is illustrated in FIG. 2 and FIG. 3, and illustration and explanation regarding the configuration of the drive means on the other three sides is omitted.

As illustrated in FIG. 3, the bar drive means 30 includes a pair of bar drive belts 36 serving as first drive belts, and bar fixing portions 38 serving as first fixing portions that fix one end portion of the corresponding Y direction bar 14 to the corresponding bar drive belt 36. The bar drive belts 36 are disposed below the Y direction bars 14 in a direction orthogonal to the Y direction bars 14, and are each entrained between a bar drive pulley 40A serving as a first drive pulley and a bar following pulley 40B that are disposed spaced apart from each other.

Each of the bar fixing portions 38 includes a grip portion 38A and a vertical downward portion 38B. As illustrated in FIG. 2, the grip portion 38A is configured by a pair of grip plates 42A, 42B that are fixed to either side of the bar drive belt 36 by bolts 41. The vertical downward portion 38B extends in a vertical direction (Z direction), and an upper end thereof is connected to the Y direction bar 14 and a lower end thereof is connected to the grip portion 38A.

The first chuck drive means 32 includes vertical members 44 extending vertically downward from the moveable chucks 26 on the central chuck 24 side, and first moveable bars 46 provided below the X direction bars 12 and the Y direction bars 14 and extending orthogonal to the X direction bars 12 and parallel to the Y direction bars 14.

A holder 48 is provided at a lower end portion of each of the vertical members 44, and the holder 48 is attached to the first moveable bar 46 through a bearing 50 so as to enable the vertical member 44 to move in the length direction of the corresponding first moveable bar 46.

The first chuck drive means 32 also includes a pair of first chuck drive belts 52 serving as second drive belts, and first chuck fixing portions 54 serving as second fixing portions that fix one end portions of the first moveable bars 46 to the first chuck drive belts 52.

The first chuck drive belts 52 are disposed below the first moveable bars 46 in a direction orthogonal to the first moveable bars 46, and are each entrained between a first chuck drive pulley 56A serving as a second drive pulley and a first chuck following pulley 56B that are disposed spaced apart from each other.

Each of the first chuck fixing portions 54 includes a grip portion 54A and a vertical downward portion 54B. The grip portion 54A is configured by a pair of grip plates 62A, 62B that are fixed to either side of the first chuck drive belt 52 by bolts 60. The vertical downward portion 54B extends in a vertical direction (Z direction), and an upper end thereof is connected to the first moveable bar 46 and a lower end thereof is connected to the grip portion 54A.

The second chuck drive means 34 similarly includes vertical members 64 extending vertically downward from the moveable chucks 28 on the intersection chuck 20 sides, and second moveable bars 66 extending orthogonal to the X direction bars 12 and parallel to the Y direction bars 14. The second moveable bars 66 are provided below the X direction bars 12 and the Y direction bars 14, and above the first moveable bars 46, such that the first moveable bars 46 and the second moveable bars 66 that extend in the same direction as each other are provided at different heights below the X direction bars 12 and the Y direction bars 14.

A holder 68 is provided at a lower end portion of each of the vertical members 64, and each of the holders 68 is attached to the corresponding second moveable bar 66 through a bearing 70 such that the vertical member 64 is movable in the length direction of the second moveable bar 66.

The second chuck drive means 34 includes a pair of second chuck drive belts 72 serving as second drive belts, and a pair of second chuck fixing portions 74 serving as second fixing portions that fix one end portion of the corresponding second moveable bar 66 to the second chuck drive belt 72.

The second chuck drive belts 72 are disposed below the second moveable bars 66 in a direction orthogonal to the second moveable bars 66, and are each entrained between a second chuck drive pulley 76A serving as a second drive pulley and a second chuck following pulley 76B disposed spaced apart from each other.

Each of the second chuck fixing portions 74 includes a grip portion 74A and a vertical downward portion 74B. The grip portion 74A is configured by a pair of grip plates 80A, 80B that are fixed to either side of the second chuck drive belt 72 by bolts 78. The vertical downward portion 74B extends in a vertical direction (Z direction), and an upper end thereof is connected to the second moveable bar 66 and a lower end thereof is connected to the grip portion 74A.

As illustrated in FIG. 3, the second chuck drive pulleys 76A are smaller in diameter than the bar drive pulleys 40A, and the first chuck drive pulleys 56A are smaller in diameter than the second chuck drive pulleys 76A. The spacing between the second chuck drive pulley 76A and the corresponding second chuck following pulley 76B is narrower than the spacing between the bar drive pulley 40A and the corresponding bar following pulley 40B, and the spacing between the first chuck drive pulley 56A and the corresponding first chuck following pulley 56B is narrower than the spacing between the second chuck drive pulley 76A and the corresponding second chuck following pulley 76B.

Moreover, drive force of a single motor 82 is transmitted to the pair of bar drive pulleys 40A, the pair of second chuck drive pulleys 76A, and the pair of first chuck drive pulleys 56A. More specifically, a first gear 84 is fixed to an output shaft 82A of the motor 82, and a pair of second gears 86 mesh with the first gear 84.

In sequence from below, the bar drive pulleys 40A, the second chuck drive pulleys 76A, and the first chuck drive pulleys 56A are respectively fixed to rotation shafts 86A that extend upward (in the Z direction) from the second gears 86.

Accordingly, the bar drive belts 36, the second chuck drive belts 72, and the first chuck drive belts 52 are driven at the same time (synchronized), and the second chuck drive belts 72 rotate at a slower speed than the bar drive belts 36, and the first chuck drive belts 52 rotate at a slower speed than the second chuck drive belts 72. Namely, the second moveable bars 66 move at a slower speed than the Y direction bars 14, and the first moveable bars 46 move at a slower speed than the second moveable bars 66.

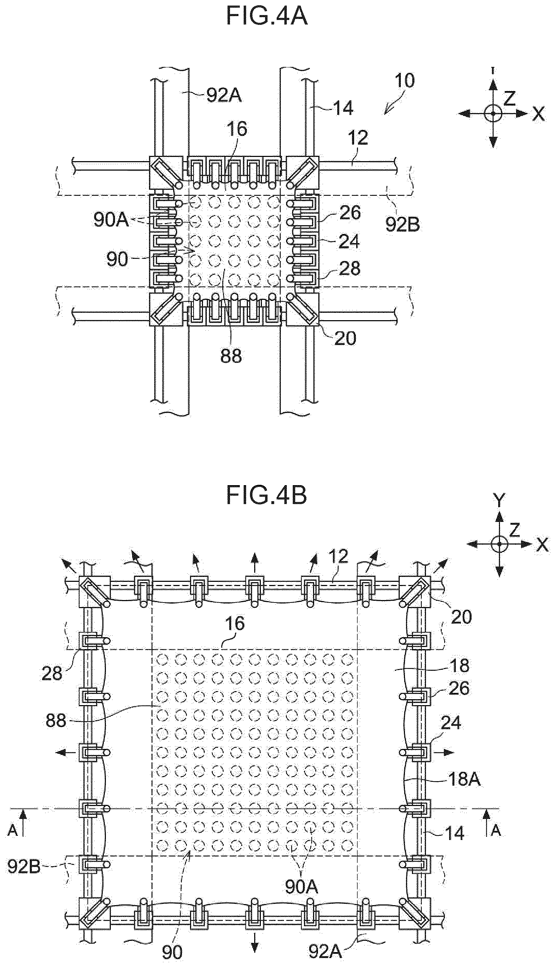

As illustrated in FIG. 4A and FIG. 4B, an opening 88 is formed below the central section 16 of the biaxial stretching device 10, and a heating means 90 is provided in the opening 88. The heating means 90 includes plural holes 90A that open upward (in the Z direction), and a non-illustrated heater and blower provided below the holes 90A.

Air that has been warmed by the heater is blown out through the holes 90A by the blower, such that hot air is blown against a lower face of the film 18 placed on the central section 16. The temperature and airflow rate of the hot air blown onto the film 18 can be adjusted by controlling the heating amount of the heater and airflow rate of the blower.

As illustrated in FIG. 5, the hot air blown onto the film 18 is recovered through outlet vents 91 provided to the side plates 13 of the biaxial stretching device 10 at portions higher than the X direction bars 12 and the Y direction bars 14. This recovered hot air is supplied to the heater and the blower again, such that hot air is circulated in the biaxial stretching device 10.

Plural (30 in the present exemplary embodiment) of the outlet vents 91 are installed at uniform spacings around the side plates 13. The temperature gradient in the biaxial stretching device 10 can be adjusted by partially blocking the outlet vents 91 and limiting the circulatory supply of hot air to the heater and the blower.

As illustrated in FIG. 4A and FIG. 4B, a pair of shutters 92A and a pair of shutters 92B are provided below the central section 16 of the biaxial stretching device 10 so as to cover the four sides of the opening 88. The shutters 92A, 92B can each be moved in a direction (the X direction or Y direction) to increase or decrease an opening area of the opening 88. Changing the opening area of the opening 88 adjusts the range over which hot air is blown by the heating means 90.

As illustrated in FIG. 5, a shaft 98 is attached to an outside end portion of one shutter 92A out of the pair of shutters 92A that move in the X direction (the shutter 92A on the left in FIG. 5), and one end of a wire 94 is attached to an inside end portion of the one shutter 92A. The other end of the wire 94 is attached to an outside end portion of the other shutter 92A (the shutter 92A on the right in FIG. 5) through a spool 96 provided below the biaxial stretching device 10.

When the shaft 98 is manually pulled in a direction toward the outside of the biaxial stretching device 10, the pair of shutters 92A move in the X direction at the same time as and symmetrically to each other about the central section 16 of the biaxial stretching device 10. Namely, the area of the opening 88 can be enlarged or reduced by moving one shutter 92A out of the pair of shutters 92A. Note that the pair of shutters 92B that move in the Y direction are configured similarly to the shutters 92A.

Temperature sensors 100 are provided at two locations, these being below the film 18 at the central section 16 of the biaxial stretching device 10, and above a lower plate 13A at the periphery of the opening 88. The temperature sensors 100 are, for example, thermocouples that detect the temperature inside the biaxial stretching device 10, namely the temperature of the hot air blown onto the film 18 and the temperature of the lower plate 13A of the biaxial stretching device 10. Heater blocks 102 are embedded below the lower plate 13A of the biaxial stretching device 10, and the temperature at the periphery of the opening 88 can be adjusted by the heater blocks 102.

### Stretching Method

As illustrated in FIG. 4A, in an initial state prior to stretching the film 18 configuring an object to be stretched, the central chucks 24 and the moveable chucks 26, 28 of the biaxial stretching device 10 are disposed in mutually contacting initial positions, and initial spacings between the central chucks 24 and the moveable chucks 26, 28 are narrow.

When stretching the film 18 with the biaxial stretching device 10, first, the gripping faces 20C of the intersection chucks 20, the gripping faces 24C of the central chucks 24, and the gripping faces 26C, 28C of the moveable chucks 26, 28 disposed in the initial positions are used to grip the outer edge of the film 18.

Then, the motors 82 are driven to rotate the bar drive pulleys 40A, the first chuck drive pulleys 56A, and the second chuck drive pulleys 76A at the same time as each other so as to drive the bar drive belts 36, the first chuck drive belts 52, and the second chuck drive belts 72 at the same time as each other but at different speeds.

The Y direction bars 14 (or the X direction bars 12), the first moveable bars 46, and the second moveable bars 66 are respectively fixed to the bar drive belts 36, the first chuck drive belts 52, and the second chuck drive belts 72. The Y direction bars 14 (or the X direction bars 12), the first moveable bars 46, and the second moveable bars 66 accordingly move in directions orthogonal to their length directions (spreading apart directions) together with the respective drive belts 36, 52, 72.

When this is performed, the central chucks 24 move in directions orthogonal to the corresponding X direction bars 12 or Y direction bars 14 together with the X direction bars 12 or the Y direction bars 14. The intersection chucks 20 move in both the length direction of the X direction bars 12 and the length direction of the Y direction bars 14.

The moveable chucks 26 move in the length direction of the X direction bars 12 or the Y direction bars 14 and in the length direction of the first moveable bars 46 at a slower speed than the movement speed of the respective intersection chucks 20. Similarly, the moveable chucks 28 move in the length direction of the X direction bars 12 or the Y direction bars 14 and in the length direction of the second moveable bars 66 at a slower speed than the movement speed of the respective intersection chucks 20, and at a faster speed than the movement speed of the respective moveable chucks 26.

As the central chucks 24 move, the stress detection sensors 25 detect tensile stress generated at the central chucks 24. The film 18 is biaxially stretched while controlling the revolution speed of the motor 82 to keep the tensile stress at a desired value, thereby enabling the film 18 to be stretched from the initial state illustrated in FIG. 4A to a stretched state illustrated in FIG. 4B. When this is performed, the stretching speed of the film 18 can be controlled by controlling the rotation speed of the motors 82.

When stretching the film 18 with the respective chucks 20, 24, 26, 28, the heating means 90 heats portions of the film 18 other than the outer edge. Specifically, as illustrated in FIG. 4A and FIG. 4B, the film 18 is stretched while varying the opening area of the opening 88 with the shutters 92A, 92B such that the opening area of the opening 88 is always smaller than the size of the film 18. The heated range of the film 18 can thus be adjusted by adjusting the exposure range of the holes 90A of the heating means 90 and the number of the holes 90A which are exposed.

### Operation and Advantageous Effects

In the present exemplary embodiment, the intersection chucks 20, the central chucks 24, and the moveable chucks 26, 28 are attached to the X direction bars 12 and the Y direction bars 14 which are disposed in a grid pattern. The first moveable bars 46 and the second moveable bars 66 that move the moveable chucks 26, 28 are provided at different heights to each other below the X direction bars 12 and the Y direction bars 14.

The central chucks 24 and the moveable chucks 26, 28 of the biaxial stretching device 10 can thus be disposed at mutually contacting positions while gripping the film 18, without causing interference between the first moveable bars 46 and the second moveable bars 66 that extend in the same direction as each other.

Accordingly, the initial spacings between the respective chucks 20, 24, 26, 28 can be made narrower than in a configuration in which the spacings between the chucks are adjusted using a pantograph mechanism, thus enabling the initial size of the film 18 to be smaller, and enabling the stretching ratio of the film 18 to be increased.

More specifically, the initial size of the film 18 can be set to approximately 60 mm × 60 mm, and the stretching limit is approximately 1.2 m × 1.2 m, enabling a stretching ratio of approximately 20 times. This enables a saving in material costs even when the film 18 is an expensive material, and also enables the mechanical properties of the film 18 at high stretching ratios to be investigated.

In the present exemplary embodiment, the X direction bars 12 and the Y direction bars 14 are moved by the bar drive means 30, and the first moveable bars 46 and the second moveable bars 66 are moved by the first chuck drive means 32 and the second chuck drive means 34, enabling biaxial stretching of the film 18. This enables the structure of the biaxial stretching device 10 to be simplified, and enables a saving in manufacturing costs, compared to configurations in which spacings between chucks are adjusted using a pantograph mechanism.

By driving the respective drive means 30, 32, 34 at the same time but at different speeds to each other, the spacings between the intersection chucks 20, the central chucks 24, and the moveable chucks 26, 28 can be kept uniform. This thereby enables a more uniform stretching ratio to be achieved about the outer edge of the film 18 than in configurations in which the first moveable bars 46 and the second moveable bars 66 are not provided.

In such cases, moving the X direction bars 12 and the first moveable bars 46 and second moveable bars 66 extending parallel to the X direction bars 12, and the Y direction bars 14 and the first moveable bars 46 and second moveable bars 66 extending parallel to the Y direction bars 14 at the same time as each other enables simultaneous biaxial stretching in both the X direction and the Y direction.

Alternatively, width-restrained stretching in the X direction only can be performed by fixing the X direction bars 12 and the first moveable bars 46 and second moveable bars 66 extending parallel to the X direction bars 12, and moving the Y direction bars 14 and the first moveable bars 46 and second moveable bars 66 extending parallel to the Y direction bars 14.

Moreover, consecutive biaxial stretching can be performed by then fixing the Y direction bars 14 and the first moveable bars 46 and second moveable bars 66 extending parallel to the Y direction bars 14, and moving the X direction bars 12 and the first moveable bars 46 and second moveable bars 66 extending parallel to the X direction bars 12 to perform width-restrained stretching in the Y direction only.

During simultaneous biaxial stretching, width-restrained stretching, and consecutive biaxial stretching, selection of movement of the X direction bars 12 (and the first moveable bars 46 and second moveable bars 66 extending parallel to the X direction bars 12) and movement of the Y direction bars 14 (and the first moveable bars 46 and second moveable bars 66 extending parallel to the Y direction bars 14), as well as the sequence and number of repetitions thereof, can be made as desired. In such cases, the stretching ratio of the film 18 may be the same in both the X direction and the Y direction, or may differ between the X direction and the Y direction.

Since the respective drive pulleys 40A, 76A, 56A are driven by a single motor 82, the number of motors 82 can be reduced in comparison to configurations in which the respective drive pulleys 40A, 76A, 56A are driven by separate motors to each other. Moreover, the proportions of spacings between the intersection chucks 20, the central chucks 24, and the moveable chucks 26, 28 can be kept uniform by adjusting the proportions between the diameters of the respective drive pulleys 40A, 76A, 56A, namely by adjusting the speed reduction ratios.

In the present exemplary embodiment, the heated range of the film 18 by the heating means 90 is adjusted by varying the opening area of the opening 88 using the shutters 92A, 92B, such that only the central portion of the film 18 is heated without an outer edge portion thereof being heated. The central portion of the film 18 is softened due to being heated and therefore stretches more readily, while the outer edge portion of the film 18 that is gripped by the respective chucks 20, 24, 26, 28 can be suppressed from being softened and stretching locally.

Moreover, since the gripping faces 20C, 24C, 26C, 28C of the respective chucks 20, 24, 26, 28 are each configured with a circular profile, localized stress is less likely to occur in the film 18 than in configurations in which the gripping faces have profiles with corners, thereby enabling the film 18 to be stretched without incurring damage.

Since there is no need to provide the outer edge of the film 18 with anchor projections or the like in advance to anchor the gripping faces 20C, 24C, 26C, 28C, a normal flat plate shaped film 18 with a uniform thickness can be employed as the rectangular object.

In addition, since the gripping faces 20C, 24C, 26C, 28C of the respective chucks 20, 24, 26, 28 are capable of gripping at the inside of the outermost edge of the film 18, the thickness of outermost edge of the film 18 can be made thicker than the thickness at the central portion of the film 18, and a framing edge portion 18A with a circular arc shaped or linear profile can be formed between the respective chucks 20, 24, 26, 28.

This enables the strength of the outermost edge of the film 18 to be maintained and enables tearing at the outermost edge to be suppressed. Moreover, the outermost edge of the film 18 can be suppressed from slipping out under the gripping faces 20C, 24C, 26C, 28C (referred to as chuck detachment).

Note that the distance between outer peripheral portions of the gripping faces 20C, 24C, 26C, 28C of the respective chucks 20, 24, 26, 28 and the outermost edge of the film 18 prior to stretching is preferably at least 2 mm at its narrowest, and is more preferably at least 5 mm. If this distance were less than 2 mm, it would not be possible to form a sufficient framing edge portion 18A after stretching the film 18.

This would result in an inability to maintain the strength of the outermost edge of the film 18, making the outermost edge prone to tearing. The outermost edge of the film 18 would also be more prone to slip out under the gripping faces 20C, 24C, 26C, 28C.

In the present exemplary embodiment, the stress detection sensors 25 are attached to the central chucks 24, such that the revolution speed of the motors 82 can be controlled to adjust the stretching speed of the film 18 according to the detected tensile stress generated at the central chucks 24, namely the tensile stress generated at the film 18.

For example, in configurations in which grips or pins are immovable in a direction orthogonal to a length direction of a pantograph mechanism or retaining rail, as in JP 2004-17367 A or JP 2005-254778 A described above, even if stress detection sensors were to be attached to the grips or pins, it would not be possible to independently detect stress generated at individual grips or pins. Namely, since the detected stress would be that arising across all of the plural grips or pins coupled to the pantograph mechanism or retaining rail, it would not be possible to accurately detect stress generated at the rectangular object.

By contrast, in the biaxial stretching device 10 of the present exemplary embodiment, the central chucks 24 are attached so as to be capable of slight movement in a direction orthogonal to the length direction of the X direction bars 12 or the Y direction bars 14 to which they are mounted.

This enables independent detection of stress arising at the central chucks 24 alone, enabling stress generated at the film 18 to be more accurately detected. This thereby enables the biaxial stretching device 10 of the present exemplary embodiment to be effectively utilized as a measuring device (test device) for stress generated at a film 18 during a biaxial stretching process, as well as in manufacture of a biaxially stretched film 18.

### Other Exemplary Embodiments

Although explanation has been given regarding an exemplary embodiment of the present invention, exemplary embodiments of the present invention are not limited thereto, and various other exemplary embodiments may be implemented within the range of the present invention.

For example, in the exemplary embodiment described above, compressed air is supplied into the cylinders 108 of the intersection chucks 20, the cylinders 110 of the central chucks 24, and the cylinders 104 of the moveable chucks 26, 28 through the respective supply tubes 21, 23, 27, 29. However, inert gases such as nitrogen gas, argon gas, or helium gas may be supplied through the supply tubes 21, 23, 27, 29.

In the exemplary embodiment described above, the intersection chucks 20, the central chucks 24, and the moveable chucks 26, 28 are each provided to both the X direction bars 12 and the Y direction bars 14. However, configuration may be made in which the intersection chucks 20 and the central chucks 24 are not provided, and the outer edge of the film 18 is gripped by the moveable chucks 26, 28 only.

In the exemplary embodiment described above, although two of the moveable chucks 26, 28 are provided between each of the intersection chucks 20 and the corresponding central chuck 24, the number of moveable chucks is not limited to that of the above exemplary embodiment, and one or three or more moveable chucks may be provided between each of the intersection chucks 20 and the corresponding central chuck 24. Note that the number of second drive means (first chuck drive means 32 and second chuck drive means 34) is increased or decreased according to the number of moveable chucks 26, 28.

In the exemplary embodiment described above, the X direction bars 12, the Y direction bars 14, the first moveable bars 46, and the second moveable bars 66 are moved by the respective drive belts 36, 52, 72. However, as long as rotation of the respective drive pulleys 40A, 76A, 56A can be stably transmitted to the X direction bars 12, the Y direction bars 14, the first moveable bars 46, and the second moveable bars 66, other drive means such as chains or wires may be employed.

In the exemplary embodiment described above, the heating means 90 is provided below the biaxial stretching device 10, and hot air is blown onto the lower face of the film 18 by the heating means 90. However, configuration may be made in which a heating means is provided above the biaxial stretching device 10 and hot air is blown onto an upper face of the film 18 by the heating means, or configuration may be made in which heating means are provided both above and below the biaxial stretching device 10 and hot air is blown onto both faces of the film 18 by the heating means 90.

Moreover, the positions and number of the temperature sensors 100 can be set as appropriate according to the position of the heating means 90, such that for example the temperature of the hot air blown onto the film 18 from above the film 18 is detected.

In the exemplary embodiment described above, the shutters 92A, 92B can be opened and closed by manually pulling the shaft 98. However, the drive mechanism of the shutters 92A, 92B is not limited to the exemplary embodiment described above, and for example, a drive lever may be connected to the shutters 92A, 92B such that the shutters 92A, 92B are opened and closed by manual operation of the drive lever. Alternatively, an electric motor may be connected to the shutters 92A, 92B such that the shutters 92A, 92B are opened and closed by controlling rotation of the electric motor.

Although a resin film 18 is employed as the rectangular object, there is no limitation to a resin object to be stretched, and any material may be employed. Examples of the resin material of the film 18 include polypropylene (PP), polyethylene terephthalate (PET), polyethylene (PE), and polyacetal (POM).

## Claims

1. A biaxial stretching device (10) comprising:
- X direction bars (12) and Y direction bars (14) that are disposed in a grid pattern such that a central section of the grid pattern constitutes a placement location for a rectangular object to be stretched;
- a plurality of moveable chucks (26, 28) that are attached to respective X direction bars (12) and Y direction bars (14) so as to be movable along a length direction of a corresponding X direction bar or Y direction bar, and that are each capable of gripping an outer edge of the rectangular object;
- a first drive means (30) configured to move the X direction bars (12) and the Y direction bars (14) in directions orthogonal to their respective length directions; the biaxial stretching device being **characterised in that** it comprises
- a second drive means (32, 34) configured to move the moveable chucks (26, 28) in the length direction of the corresponding X direction bar or Y direction bar.

2. The biaxial stretching device (10) of claim 1,
further comprising:
intersection chucks (20) that are provided at intersections between the X direction bars (12) and the Y direction bars (14), that are attached to the X direction bars (12) and the Y direction bars (14) so as to be movable along their length directions, and that are each capable of gripping a corner of the rectangular object; and
central chucks (24) that are attached to length direction central portions of the X direction bars (12) and the Y direction bars (14), and that are each capable of gripping a central portion of the outer edge of the rectangular object,
the moveable chucks (26, 28) being provided between the intersection chucks (20) and the central chucks (24), and each being capable of gripping the outer edge of the rectangular object between a central portion and a corner of the rectangular object, and
the second drive means (32, 34) being synchronized with the first drive means (30) and configured to move the moveable chucks (26, 28) at a slower speed than a speed at which the X direction bars (12) and the Y direction bars (14) are moved.

3. The biaxial stretching device (10) of either claim 1 or 2,
wherein the first drive means (30) includes;
- first drive belts (36), each disposed in a direction orthogonal to the corresponding X direction bar or Y direction bar, and
- first fixing portions (38) respectively fixing both end portions of the X direction bars (12) and the Y direction bars (14) to corresponding first drive belts (36);
wherein the second drive means (32, 34) includes;
- vertical members (44, 64) extending vertically downward from the moveable chucks (26, 28),
- moveable bars (46, 66) each provided below the respective X direction bars (12) and Y direction bars (14), and each extending in a direction orthogonal to the corresponding X direction bar or Y direction bar,
- holders (48, 68) that attach lower end portions of the vertical members (44, 64) to corresponding moveable bars (46, 66) so as to be movable in the length direction of the corresponding moveable bars (46, 66),
- second drive belts (52, 72) disposed in directions orthogonal to respective moveable bars (46, 66), and
- second fixing portions (54, 74) respectively fixing both end portions of the moveable bars (46, 66) to the second drive belts (52, 72); and
- drive force of a single motor is transmitted to first drive pulleys (40A) around which respective first drive belts (36) are entrained, and to second drive pulleys (56A) around which respective second drive belts (52, 72) are entrained, each second drive pulley (56A) having a smaller diameter than the first drive pulleys (40A).

4. The biaxial stretching device (10) of any one of claims 1 to 3,
further comprising:
- an opening (88) formed at the central portion lying between the X direction bars (12) and the Y direction bars (14);
- a shutter (92A, 92B) that is capable of varying an opening area of the opening; and
- a heating means (90) that blows hot air onto one or both faces of the rectangular object through the opening (88).

5. The biaxial stretching device (10) of claim 2,
wherein gripping faces of the intersection chucks (20), the central chucks (24), and the moveable chucks (26, 28) are each configured with a circular profile, and are capable of gripping the rectangular object at an inside of an outermost edge of the rectangular object.

6. The biaxial stretching device (10) of either claim 2 or 5,
wherein stress detection sensors (25) configured to detect tensile stress generated at the central chucks (24) are attached to the central chucks (24).

## Patentansprüche

1. Biaxiale Streckvorrichtung (10), die Folgendes aufweist:
- X-Richtungs-Stäbe (12) und Y-Richtungs-Stäbe (14), die in einem Gittermuster angeordnet sind, derart, dass ein zentraler Bereich des Gittermusters einen Anordnungsbereich für einen zu streckenden rechteckigen Gegenstand bildet;
- mehrere bewegliche Spannvorrichtungen (26, 28), die an jeweiligen X-Richtungs-Stäben (12) und Y-Richtungs-Stäben (14) so angebracht sind, dass sie entlang einer Längsrichtung eines jeweiligen X-Richtungs- oder Y-Richtungs-Stabs beweglich sind, und die jeweils ausgebildet sind, eine Außenkante des rechteckigen Objekts zu halten;
- eine erste Antriebseinrichtung (30), die dazu ausgebildet ist, die X-Richtungs-Stäbe (12) und die Y-Richtungs-Stäbe (14) in Richtungen zu bewegen, die orthogonal zu ihren jeweiligen Längsrichtungen verlaufen;
**gekennzeichnet durch**
- eine zweite Antriebseinrichtung (32, 34), die dazu ausgebildet ist, die beweglichen Spannvorrichtungen (26, 28) in der Längsrichtung des jeweiligen X-Richtungs- oder Y-Richtungs-Stabs zu bewegen.

2. Biaxiale Streckvorrichtung (10) nach Anspruch 1,
die ferner Folgendes aufweist:
- Kreuzungsspannvorrichtungen (20), die an den Kreuzungspunkten zwischen den X-Richtungs-Stäben (12) und den Y-Richtungs-Stäben (14) angeordnet sind, und die an den X-Richtungs-Stäben (12) und den Y-Richtungs-Stäben (14) so angebracht sind, dass sie entlang ihrer Längsrichtungen beweglich sind, und die jeweils dazu ausgebildet sind, eine Ecke des rechteckigen Objekts zu halten; und
- zentrale Spannvorrichtungen (24), die an in Längsrichtung zentralen Bereichen der in X-Richtungs-Stäbe (12) und der Y-Richtungs-Stäbe (14) angeordnet sind, und die jeweils dazu ausgebildet sind, einen zentralen Bereich der Außenkante des rechteckigen Objekts zu halten,
wobei die beweglichen Spannvorrichtungen (26, 28) zwischen den Kreuzungsspannvorrichtungen (20) und den zentralen Spannvorrichtungen (24) angeordnet sind, und jeweils dazu ausgebildet sind, die Außenkante des rechteckigen Objekts zwischen einem zentralen Bereich und einer Ecke des rechteckigen Objekts zu halten, und
wobei die zweite Antriebseinrichtung (32, 34) mit der ersten Antriebseinrichtung (30) synchronisiert ist und dazu ausgebildet ist, die beweglichen Spannvorrichtungen (26, 28) mit einer geringeren Geschwindigkeit zu bewegen, als mit einer Geschwindigkeit, mit der die X-Richtungs-Stäbe (12) und die Y-Richtungs-Stäbe (14) bewegt werden.

3. Biaxiale Streckvorrichtung (10) nach Anspruch 1 oder 2,
wobei die erste Antriebseinrichtung (30) Folgendes aufweist:
- erste Antriebsriemen (36), die jeweils in einer Richtung orthogonal zu dem jeweiligen X-Richtungs- oder Y-Richtungs-Stab angeordnet sind, und
- erste Befestigungsbereiche (38), die jeweils beide Endbereiche der X-Richtungs-Stäbe (12) und der Y-Richtungs-Stäbe (14) an den jeweiligen ersten Antriebsriemen (36) fixieren;
wobei die zweite Antriebseinrichtung (32, 34) Folgendes aufweist:
- vertikale Elemente (44, 64), die sich von den beweglichen Spannvorrichtungen (26, 28) vertikal nach unten erstrecken,
- bewegliche Stäbe (46, 66), die jeweils unter den entsprechenden X-Richtungs-Stäben (12) und Y-Richtungs-Stäben (14) angeordnet sind und die sich jeweils in einer Richtung orthogonal zu den jeweiligen X-Richtungs-Stäben oder Y-Richtungs-Stäben erstrecken,
- Halterungen (48, 68), die untere Endbereiche der vertikalen Elemente (44, 64) an den jeweiligen beweglichen Stäben (46, 66) so fixieren, dass sie in der Längsrichtung der jeweiligen beweglichen Stäben (46, 66) beweglich sind,
- zweite Antriebsriemen (52, 72), die in Richtungen orthogonal zu den jeweiligen beweglichen Stäben (46, 66) angeordnet sind, und
- zweite Befestigungselemente (54, 74), die jeweils beide Endbereiche der beweglichen Stäbe (46, 66) an den zweiten Antriebsriemen (52, 72) fixieren; und
- wobei eine Antriebskraft eines einzelnen Motors auf erste Antriebsscheiben (40A) übertragen wird, um die die jeweiligen ersten Antriebsriemen (36) mitgenommen werden, und auf zweite Antriebsscheiben (56A) übertragen wird,
um die die jeweiligen zweiten Antriebsriemen (52, 72) mitgenommen werden, wobei jede zweite Antriebsscheibe (56A) einen kleineren Durchmesser als die ersten Antriebsscheiben (40A) aufweist.

4. Biaxiale Streckvorrichtung (10) nach einem der Ansprüche 1 bis 3,
die ferner Folgendes aufweist:
- eine Öffnung (88), die in dem zentralen Bereich zwischen den X-Richtungs-Stäben (12) und den Y-Richtungs-Stäben (14) ausgebildet ist;
- einen Verschluss (92A, 92B), der derart ausgebildet ist, eine Öffnungsfläche der Öffnung zu verändern; und
- eine Heizeinrichtung (90), die durch die Öffnung (88) heiße Luft auf eine oder beide Seiten des rechteckigen Gegenstands bläst.

5. Biaxiale Streckvorrichtung (10) nach Anspruch 2,
wobei Halteflächen der Kreuzungsspannvorrichtungen (20), der zentralen Spannvorrichtungen (24) und der beweglichen Spannvorrichtungen (26, 28) jeweils ein kreisförmiges Profil aufweisen und dazu ausgebildet sind, das rechteckige Objekt an einer Innenseite einer äußersten Kante des rechteckigen Objekts zu halten.

6. Biaxiale Streckvorrichtung (10) nach Anspruch 2 oder 5,
die Spannungserfassungssensoren (25) aufweist, die dazu ausgebildet sind, an den zentralen Spannvorrichtungen (24) erzeugte Zugspannung zu detektieren, und die an den zentralen Spannvorrichtungen (24) angebracht sind.

## Revendications

1. Dispositif d'étirement biaxial (10) comprenant :
des barres de direction X (12) et des barres de direction Y (14) qui sont disposées dans un motif en grille de telle sorte qu'une section centrale du motif en grille constitue un emplacement de positionnement pour un objet rectangulaire qu'il s'agit d'étirer ;
- une pluralité de mandrins déplaçables (26, 28) qui sont attachés à des barres de direction X (12) et à des barres de direction Y (14) respectives de manière à pouvoir être déplacés le long d'une direction longitudinale d'une barre de direction X ou d'une barre de direction Y correspondante, et qui sont capables de saisir un bord extérieur de l'objet rectangulaire ;
- un premier moyen d'entraînement (30) configuré pour déplacer les barres de direction X (12) et les barres de direction Y (14) dans des directions orthogonales à leurs directions longitudinales respectives ;
le dispositif d'étirement biaxial étant **caractérisé en ce qu'**il comprend
- un second moyen d'entraînement (32, 34) configuré pour déplacer les mandrins déplaçables (26, 28) dans la direction longitudinale de la barre de direction X ou de la barre de direction Y correspondante.

2. Dispositif d'étirement axial (10) selon la revendication 1,
comprenant en outre :
des mandrins d'intersection (20) qui sont prévus à des intersections entre les barres de direction X (12) et les barres de direction Y (14), qui sont fixés aux barres de direction X (10) et aux barres de direction Y (14) de manière à pouvoir être déplacés le long de leurs directions longitudinales, et qui sont capables de saisir un coin de l'objet rectangulaire ; et
des mandrins centraux (24) qui sont attachés à des portions centrales de direction longitudinale des barres de direction X (12) et des barres de direction Y (14), qui sont chacun capables de saisir une portion centrale du bord extérieur de l'objet rectangulaire,
les mandrins déplaçables (26, 28) étant prévus entre les mandrins d'intersection (20) et les mandrins centraux (24), et étant chacun capables de saisir le bord extérieur de l'objet rectangulaire entre une portion centrale et un coin de l'objet rectangulaire, et
le second moyen d'entraînement (32, 34) étant synchronisé avec le premier moyen d'entraînement (30) et configuré pour déplacer les mandrins déplaçables (26, 28) à une vitesse plus lente qu'une vitesse à laquelle les barres de direction X (12) et les barres de direction Y (14) sont déplacées.

3. Dispositif d'étirement biaxial (10) selon l'une ou l'autre des revendications 1 ou 2,
dans lequel le premier moyen d'entraînement (30) inclut :
- des premières courroies d'entraînement (36), disposées chacune dans une direction orthogonale à la barre de direction X ou à la barre de direction Y correspondante, et
- des premières portions de fixation (38) fixant respectivement les deux portions d'extrémité des barres de direction X (12) et des barres de direction Y (14) aux premières courroies d'entraînement (36) correspondantes ;
dans lequel le second moyen d'entraînement (32, 34) inclut :
- des éléments verticaux (44, 64) s'étendant verticalement vers le bas depuis les mandrins déplaçables (26, 28),
- des barres déplaçables (46, 66) prévues chacune en dessous des barres de direction X (12) et des barres de direction Y (14) respectives, et s'étendant chacune dans une direction orthogonale à la barre direction X ou à la barre de direction Y correspondante,
- des supports (48, 68) qui attachent des portions d'extrémité inférieures des éléments verticaux (44, 64) à des barres déplaçables (46, 66) correspondantes de manière à pouvoir être déplacés dans la direction longitudinale des barres déplaçables (46, 66) correspondantes,
- des secondes courroies d'entraînement (52, 72) disposées dans des directions orthogonales à des barres déplaçables (46, 66) respectives, et
- des secondes portions de fixation (54, 74) fixant respectivement les deux portions d'extrémité des barres déplaçables (46, 66) aux secondes courroies d'entraînement (52, 72) ; et
- une force d'entraînement d'un moteur unique est transmise à des premières poulies d'entraînement (40A) autour desquelles des premières courroies d'entraînement (36) respectives sont entraînées, et à des secondes poulies d'entraînement (56A) autour desquelles des secondes courroies d'entraînement (52, 72) respectives sont entraînées, chaque seconde poulie d'entraînement (56A) ayant un diamètre plus petit que les premières poulies d'entraînement (40A).

4. Dispositif d'étirement biaxial (10) selon l'une quelconque des revendications 1 à 3,
comprenant en outre :
- une ouverture (88) formée au niveau de la portion centrale se trouvant entre les barres de direction X (12) et les barres de direction Y (14) ;
- un obturateur (92A, 92B) qui est capable de faire varier une aire d'ouverture de l'ouverture ; et
- un moyen de chauffage (90) qui souffle de l'air chaud jusque sur une ou plusieurs faces de l'objet rectangulaire à travers l'ouverture (88).

5. Dispositif d'étirement biaxial (10) selon la revendication 2,
dans lequel des faces de préhension des mandrins d'intersection (20), des mandrins centraux (24) et des mandrins déplaçables (26, 28) sont configurées chacune avec un profil circulaire, et sont capables de saisir l'objet rectangulaire au niveau de l'intérieur d'un bord le plus extérieur de l'objet rectangulaire.

6. Dispositif d'étirement biaxial (10) selon l'une ou l'autre des revendications 2 ou 5,
dans lequel des capteurs de détection de contrainte (25) configurés pour détecter une contrainte de traction générée au niveau des mandrins centraux (24) sont attachés aux mandrins centraux (24).
